# EUROPÄISCHE PATENTANMELDUNG

(11) **EP 3 939 414 A1**
(43) Veröffentlichungstag der Anmeldung: **19.01.2022**
(21) Anmeldenummer: 21185511.9
(22) Anmeldetag: 14.07.2021
(51) Int. Cl.: A01G 13/02, A01G 25/00, A01G 27/02, A47C 9/00, A47C 11/00

(54) **BEWÄSSERUNGSBEHÄLTER ALS SITZ, UND BEWÄSSERUNGSANORDNUNG**

(30) Priorität: 14.07.2020 DE 202020104069 U
(71) Anmelder: Humberg GmbH, 48301 Nottuln (DE)
(72) Erfinder: Humberg, Franz, 48301 Nottuln (DE)
(74) Vertreter: Habbel, Ludwig

(57) **Zusammenfassung**

Bei einem Bewässerungsbehälter (6), der zur Bewässerung einer Pflanze (2) bestimmt ist, wobei der Behälter (6) eine Einfüllöffnung (9) und wenigstens eine Auslassöffnung (15) aufweist, schlägt die Erfindung vor, dass der Behälter (6) ein formstabiles Gehäuse aufweist und in der Art als Sitzgelegenheit ausgestaltet ist, dass er eine Sitzfläche mit einer Sitzhöhe von wenigstens 30 cm aufweist. Weiterhin betrifft die Erfindung eine Bewässerungsanordnung (1) mit einem solchen Behälter (6) zur Bewässerung einer über eine Bodenoberfläche (4) nach oben ragenden Pflanze (2).

## Beschreibung

Die Neuerung betrifft einen Bewässerungsbehälter nach dem Oberbegriff des Anspruchs 1, wobei nachfolgend der Bewässerungsbehälter kurz auch nur als Behälter bezeichnet wird.

Aus der DE 10 2010 017 383 B4 ist eine Bewässerungsanordnung bekannt, bei der Schlauch- bzw. Rohrleitungen, die auch in Art eines Behälters ein gewisses Aufnahmevolumen für Wasser bereitstellen, das Wasser bis unter das Wurzelwerk einer Pflanze führen. Insbesondere bei neu gepflanzten Großpflanzen kann dadurch ein gerichtetes Wurzelwachstum erzielt werden, bei dem sich das Wurzelwerk in die Tiefe entwickelt, so dass erstens, wenn das Wurzelwerk eine gewisse Tiefe innerhalb des Bodens erreicht hat, eine sehr gute Selbstversorgung der Großpflanze erzielt werden kann, und so dass zweitens Schäden an der Bodenoberfläche, z.B. an gepflasterten oder asphaltierten Geh- und Fahrwegen, vermieden werden können, die ansonsten durch ein nach oben gerichtetes Wachstum des Wurzelwerks hervorgerufen werden könnten.

Für bereits im Bestand befindliche Pflanzen kommt die nachträgliche Installation einer derartigen Bewässerungsanordnung aus wirtschaftlichen Gründen oder um die Pflanze nicht zu schädigen, häufig nicht in Frage. Jedoch kann eine unterstützende Bewässerung insbesondere in längeren Trockenzeiten, wie sie in der jüngeren Vergangenheit wiederholt aufgetreten sind, erforderlich sein, die dann von oberhalb des Wurzelwerks erfolgt. Wenn mithilfe von kommunalen Tankfahrzeugen eine schwallartige Bewässerung erfolgt, fließt häufig ein Großteil des Wassers über die ausgetrocknete Bodenfläche ab, ohne die Wurzeln der Pflanze zu erreichen. Nicht nur aufgrund der ungenutzten Wassermenge ist diese Art der Bewässerung unwirtschaftlich, sondern insbesondere aufgrund der vergleichsweise hohen Wiederholfrequenz, um die Bewässerung in kurzen zeitlichen Intervallen durchzuführen.

Aus der Website www.treebag.de ist eine Bewässerungsanordnung bekannt, bei welcher ein oder mehrere gattungsgemäße Bewässerungsbehälter in Form sogenannter Bewässerungssäcke neben dem Stamm der Pflanze auf dem Boden abgelegt werden. Die Bewässerungssäcke dienen als Wasserspeicher, die das eingefüllte Wasser durch vergleichsweise klein bemessene Auslassöffnungen über einen längeren Zeitraum an den Boden abgeben. Dadurch ist erstens gesichert, dass der Boden die jeweils angebotene Wassermenge auch tatsächlich aufnehmen kann und eine ungenutzt über die Bodenfläche abfließende Wassermenge vermieden oder möglichst gering gehalten wird, und zweitens wird durch diese Art der langsamen, verzögerten Bewässerung, ähnlich einer Tröpfchenbewässerung, die zur Bewässerung in die Behälter eingefüllte Wassermenge über einen langen Zeitraum genutzt, so dass die zeitlichen Intervalle, in denen Wasser zur Bewässerung an die Pflanze gebracht werden muss, deutlich vergrößert werden können.

Der Neuerung liegt die Aufgabe zugrunde, einen gattungsgemäßen Bewässerungsbehälter dahingehend zu verbessern, dass dieser möglichst gut vor Beschädigungen geschützt ist, einen möglichst geringen Wartungsaufwand erfordert und über die Bewässerungsfunktion hinaus einen zusätzlichen Nutzen bietet. Weiterhin legt der Neuerung die Aufgabe zugrunde, eine Bewässerungsanordnung mit diesen Vorteilen anzugeben.

Diese Aufgabe wird durch einen Bewässerungsbehälter mit den Merkmalen des Anspruchs 1 gelöst sowie durch eine Bewässerungsanordnung nach Anspruch 18. Vorteilhafte Ausgestaltungen sind in den Unteransprüchen beschrieben.

Die Neuerung schlägt mit anderen Worten vor, dass der Behälter erstens ein formstabiles Gehäuse aufweist. Wenn beispielsweise von einem Baum, an dem der Behälter angeordnet ist, oder von Pflanzen aus der Umgebung Sämereien herabfallen oder vom Wind herangetragen werden und auf dem Behälter landen bzw. an dem Behälter anhaften, können Beschädigungen durch Vögel, welche diese Sämereien aufpicken, an dem formstabilen Behälter ausgeschlossen werden. Zudem ergibt sich ein besserer Schutz gegen Vandalismus durch die stabile Ausgestaltung der Behälterwand. Im Winter ist der formstabile Behälter frostfest, so dass der Wartungsaufwand insofern minimiert werden kann, als der Behälter nicht im Herbst bzw. zum Winteranfang entfernt und eingelagert werden muss und im folgenden Frühjahr erneut ausgebracht und an den zu bewässernden Pflanzen installiert werden muss wie ein gattungsgemäßer Bewässerungsbehälter aus einem folienartig dünnen Material. Vielmehr kann der formstabile Behälter ganzjährig am Aufstellungsort verbleiben.

Zweitens ist vorschlagsgemäß vorgesehen, dass das formstabile Gehäuse des Behälters eine zusätzliche Nutzung des Behälters ermöglicht, indem der formstabile Bewässerungsbehälter als Sitzgelegenheit genutzt werden kann. Eine Bewässerungsanordnung unter Verwendung eines vorschlagsgemäßen formstabilen Bewässerungsbehälters kann die Anschaffung eigens hergestellter Sitzbänke, wie sie zur Möblierung des öffentlichen Raums bekannt sind, in wirtschaftlich vorteilhafter Weise erübrigen. Die Sitzhöhe des Behälters ist wenigstens 30 cm oberhalb der Bodenoberfläche vorgesehen, vorteilhaft zwischen 40 und 60 cm oberhalb der Bodenoberfläche, ähnlich wie das beispielsweise bei öffentlichen Parkbänken und vergleichbaren öffentlich nutzbaren Sitzgelegenheiten der Fall ist, um für eine Vielzahl unterschiedlich großer Benutzer einen guten Sitzkomfort zu ermöglichen.

Zusätzlich zu den genannten funktionalen Vorteilen des vorschlagsgemäßen Bewässerungsbehälters ergibt sich stets als Zusatznutzen auch noch ein ästhetischer Vorteil durch die klar definierte Formgebung des Behälters, die unabhängig vom Füllstand des Behälters stets gleich bleibt und somit anstelle einer provisorisch wirkenden, veränderlichen optischen Ausgestaltung eine gewünschte optische Anmutung dieses Gestaltungselements des öffentlichen Raums sicherstellt und beibehält.

Um den Bewässerungsbehälter zu einer Sitzgelegenheit auszugestalten, kann in einer Ausgestaltung eine Oberseite des Behälters selbst, die liegend ausgerichtet ist, als Sitzfläche genutzt werden. Dies ermöglicht eine besonders wirtschaftliche Herstellung des Behälters, da ein Abschnitt der Behälterwände unmittelbar als Sitzfläche genutzt werden kann und keine weitere Bearbeitung des Behälters erforderlich ist, um diesen zu einer Sitzgelegenheit auszugestalten.

In einer anderen Ausgestaltung kann vorgesehen sein, dass die Sitzfläche des Behälters nicht durch eine Behälterwand bzw. einen Abschnitt der Behälterwände gebildet ist, sondern vielmehr durch wenigstens ein separates Bauteil. Dieses separate Bauteil kann beispielsweise in Form einer einzigen Platte ausgestaltet sein, oder es können mehrere separate Bauteile beispielsweise in Form mehrerer Leisten vorgesehen sein, welche gemeinsam die Sitzfläche bilden. Die Schaffung der Sitzfläche durch ein oder mehrere separate Bauteile ermöglicht einerseits einen besonders hohen Sitzkomfort insbesondere bei sehr niedrigen oder sehr hohen Temperaturen, da geeignete Werkstoffe verwendet werden können, beispielsweise Holz, die sich von dem Werkstoff der Behälterwandung unterscheiden können. Außerdem kann durch die Verwendung eines oder mehrerer separater Bauteile zur Schaffung der Sitzfläche auch das ästhetische Erscheinungsbild des Behälters aufgewertet werden, da der Behälter nicht als monolithischer Block aus Kunststoff oder Metall in Erscheinung tritt.

Die Befestigung eines oder mehrerer separater Bauteile, welche die Sitzfläche bilden, kann in einer Ausgestaltung unmittelbar an der Behälterwand erfolgen. Beispielsweise kann die Sitzfläche vom Behälterinneren her verschraubt werden, falls die Verschraubungsstellen dementsprechend zugänglich sind. Alternativ kann die Befestigung von außen, beispielsweise durch Verklebung, unmittelbar auf dem Behälter erfolgen. Die Verklebung oder eine Verschraubung vom Behälterinneren her ist insofern vorteilhaft, als keine sichtbaren Befestigungselemente verwendet werden, die ansonsten möglicherweise Angriffspunkte für Vandalismus darstellen könnten. Außerdem ist keine besondere Ausgestaltung der Behälteroberfläche erforderlich, vielmehr kann eine Sitzfläche einfach direkt auf den betreffenden Abschnitt einer Behälterwand aufgeklebt oder mit ihr verschraubt werden, unabhängig davon, ob es sich um eine einzige Platte oder um mehrere Leisten handelt.

Alternativ dazu, eines oder mehrere die Sitzfläche bildende Bauteile unmittelbar an der Behälterwand zu befestigen, kann vorgesehen sein, dass der Behälter eine Halterung für die Sitzfläche aufweist. Diese Halterung kann beispielsweise einen Vorsprung aufweisen, der am Behälter nach außen ragt und somit einen Befestigungssockel bildet, so dass beispielsweise für den Fall einer Verschraubung die Verschraubungsstellen problemlos zugänglich sind. Die Halterung kann jedoch auch eine Vertiefung aufweisen, in die ein Abschnitt der Sitzfläche eintaucht, so dass durch einen Formschluss eine verschiebesichere Montage der Sitzfläche ermöglicht wird.

In einer Ausgestaltung kann der Behälter einen Grundriss aufweisen, der den Stamm der Pflanze teilweise umschließt, also beispielsweise U- oder C-förmig gebogen oder mehreckig um den Stamm herum verläuft. Auf diese Weise kann auf einer vergleichsweise kleinen Grundfläche um den Stamm herum ein möglichst großes Behältervolumen bereitgestellt werden. Dabei wird eine problemlose Aufstellung des Behälters dadurch unterstützt, dass dieser Behälter einteilig ausgestaltet sein kann und der Montageaufwand dementsprechend gering gehalten werden kann. Der Bewässerungsbehälter kann als Einzelbehälter frei aufgestellt werden.

Zudem kann der Behälter durch diese Ausgestaltung als Baumschutz dienen: durch die Wirkung als Abstandshalter wird der Stamm vor Beschädigungen durch Fahrzeuge, wie z.B. durch Kontakt mit Prallflächen oder Rückspiegeln geschützt. Der Behälter kann auch einen Schutz gegen giftige Einflüsse bieten: beispielsweise gegen eine Nikotinbelastung durch Zigarettenkippen, und im Winter gegen Streusalz.

In einer anderen Ausgestaltung kann vorgesehen sein, dass zwei oder mehr Behälter miteinander verbunden werden können. Auch derartige Behälter können so ausgestaltet sein, dass sie jeweils für sich genommen als Einzelbehälter frei aufgestellt werden können. Es kann jedoch auch vorgesehen sein, dass ein solcher Behälter für sich genommen nicht die erforderliche Standfestigkeit aufweist, sondern erst durch die Verbindung mit wenigstens einem weiteren Behälter eine standfeste Sitzgelegenheit schafft. Beispielsweise können zwei oder mehr Behälter so miteinander verbunden werden, dass sie in Art eines geschlossenen Rings um den Stamm herum verlaufen, oder dass sie beispielsweise T-förmig aneinander anstoßen, wobei die Verbindung von zwei oder mehr Behältern miteinander mehrere Vorteile hat:
Erstens können ein größeres Tankvolumen bereitstellt und längere Füll-Intervalle ermöglicht werden. Im Vergleich mit einem Behälter, der einen offenen Grundriss aufweist, beispielsweise einem C- oder U-förmigen Grundriss, weist beispielsweise eine Behälteranordnung in Art eines geschlossenen Rings ein größeres Behältervolumen dadurch auf, dass der ansonsten verbleibende Freiraum zwischen den beiden Enden des Behälters geschlossen ist und ebenfalls als Füllvolumen nutzbar ist. Dies wäre beispielsweise mit einer wenigstens zweiteiligen Ausgestaltung des Behälters möglich.

Zweitens wird dadurch, dass die Behälter miteinander verbunden werden können, die unbefugte Entfernung der Behälter aufgrund der vergrößerten Abmessungen und des größeren Gewichts erschwert bzw. verhindert. Wenn die Behälter zu einem geschlossenen Ring miteinander verbunden werden, kommt noch hinzu, dass dieser Ring beispielsweise den Stamm eines Baums umgeben kann, so dass die Behälteranordnung formschlüssig gegen Verlagerung oder Diebstahl gesichert ist.

Drittens bewirken die mehreren einzelnen, zu einer Behälteranordnung verbundenen Behälter eine höhere mechanische Stabilität der Gesamtanordnung: dort, wo benachbarte Behälter mit ihren Wänden aneinander stoßen, ergibt sich eine Stabilisierung der Gesamtanordnung, ähnlich wie sie durch Zwischenwände in einem einzigen Behälter erzielbar wäre. Allerdings müssen dazu keine Zwischenwände in den Behälter eingebaut werden, was dessen Herstellung kompliziert machen würde. Vielmehr können die einzelnen Behälter preisgünstig und jeweils ohne Zwischenwand hergestellt werden.

Falls die erwähnte Verbindung benachbarter Bewässerungsbehälter vorgesehen ist, kann insbesondere vorteilhaft vorgesehen sein, dass benachbarte Behälter miteinander mechanisch in der Art verbunden sind, dass sie einen gemeinsam handhabbaren Verbund bilden, der mechanisch stabil ist. Hierdurch kann beispielsweise die Belastbarkeit einer als Sitzbank dienenden Behälteranordnung verbessert werden, zudem kann die Montage am Aufstellungsort beschleunigt werden, indem werkseitig vorgefertigte Module angeliefert werden, die aus mehreren bereits miteinander verbundenen Behältern bestehen, wobei sich der Grad einer solchen Vorfertigung beispielsweise nach dem verfügbaren Transportvolumen der verwendeten Fahrzeuge richten kann, beispielsweise den Abmessungen einer Ladefläche bzw. Laderaums.

Wenn zwei oder mehr Behälter miteinander verbunden sind, kann vorgesehen sein, dass stets gleiche Behälter verwendet werden wie dies beispielsweise bei der oben angesprochenen ringförmigen Ausgestaltung der Fall sein kann. In diesem Fall weist jeder Behälter eine Einfüllöffnung und eine Auslassöffnung auf. Für den Anwender bedeutet dies ein hohes Maß an Anwendungsflexibilität, da er einzelne Behälter, die bereits jeweils für sich genommen die vollständige Funktionalität zur Bewässerung und als Sitzgelegenheit aufweisen, nicht nur einzeln nutzen kann, sondern bei Bedarf zu einer größeren Behälteranordnung verbinden kann, ohne hierzu weitere, speziell ausgestaltete Behälter verwenden zu müssen. Daher kann vorgesehen sein, dass jeder Behälter nicht nur eine Einfüllöffnung und eine Auslassöffnung aufweist, sondern auch eine Öffnung, die als Anschlussöffnung bezeichnet werden kann und die eine Strömungsverbindung mit einem zweiten Behälter ermöglicht. Insbesondere kann der Behälter vorzugsweise zwei Anschlussöffnungen aufweisen, so dass er zwischen zwei benachbarten Behältern angeordnet und mit beiden strömungstechnisch verbunden werden kann, so dass die strömungstechnisch miteinander verbundenen Behälter insgesamt ein besonders großes Füllvolumen der Behälteranordnung bereitstellen.

Es kann jedoch auch vorgesehen sein, unterschiedliche Behältertypen bereitzustellen, beispielsweise Behälter, die keine Auslassöffnung und / oder keine Einfüllöffnung aufweisen. Für den Hersteller der Behälter bedeutet dies, dass die Behälter je nach Kundenwunsch mit den entsprechenden Öffnungen und den zugehörigen Beschlägen ausgestattet werden, so dass besonders preisgünstig die einzelnen Behältertypen je nach Verwendungszweck nur mit den Anschlüssen / Öffnungen / Beschlägen versehen werden, die für diesen Verwendungszweck erforderlich sind.

Jedenfalls können benachbarte Behälter in einer vorteilhaften Ausgestaltung in einer Strömungsverbindung miteinander stehen, mittels einer Verbindung, die von Wasser durchströmbar ist. Beispielsweise kann ein kurzes Rohrleitungsstück oder auch eine längere Rohrleitung zwei Behälter in der Art miteinander verbinden, dass beide Behälter ein gemeinsames Wasserreservoir bilden. Wenn beispielsweise nur einer dieser beiden Behälter mit Auslassöffnungen versehen ist und über dem Wurzelwerk einer Pflanze angeordnet ist, erfolgt nur dort die Bewässerung der Pflanze, und der zweite Behälter dient ausschließlich zur Vergrößerung des Füllvolumens der Gesamtanordnung, um möglichst lange Intervalle für die Befüllung der Behälteranordnung zu ermöglichen. Dementsprechend kann dieser zweite Behälter auch an einer Stelle angeordnet sein, die sich nicht über dem Wurzelwerk der Pflanze befindet.

Abgesehen davon, dass sich Behälter durch ihre funktionelle Ausstattung unterscheiden können, beispielsweise wie oben erwähnt mit oder ohne Auslassöffnungen, können Sie sich auch durch ihre Formgebung unterscheiden, beispielsweise indem sie mit unterschiedlichen Grundrissen hergestellt werden, wie z.B. mit unterschiedlichen Krümmungsradien oder als geradlinige Behälter mit unterschiedlichen Längen. Dadurch lassen sich mit wenigen unterschiedlich ausgestalteten Elementen Behälteranordnungen mit nahezu beliebigen Grundrissen und somit ein dementsprechend nahezu beliebig großes Tankvolumen schaffen. Beispielsweise kann der Behälter als längere, zum Beispiel bogenförmig oder serpentinenförmig verlaufende Sitzbank dienen und sich beispielsweise am Rand einer Grünfläche bzw. zwischen mehreren Bäumen entlang erstrecken. Oder bei unterschiedlichen Baumabständen können jeweils zwischen zwei benachbarten Bäumen mithilfe der vorschlagsgemäßen Bewässerungsbehälter Sitzbänke unterschiedlicher Länge geschaffen werden. Jeweils dort, wo eine Bewässerung vorgesehen ist, sind in dieser Behälteranordnung Behälter mit Auslassöffnungen montiert.

Das Rotationsgussverfahren hat sich in der Praxis als hervorragend geeignet herausgestellt, um hohle Gegenstände aus mechanisch hochbelastbaren Kunststoffmaterialien mit der gewünschten Wandstärke herzustellen. Der vorschlagsgemäße Behälter kann daher beispielsweise aus Kunststoff bestehen und im Rotationsgussverfahren hergestellt sein, was sich angesichts der vergleichsweise niedrigeren Kosten für die Gießformen insbesondere für kleinere und mittlere Stückzahlen eignet. Alternativ kann die Herstellung vorschlagsgemäßer Behälter aus Kunststoff im Spritzgussverfahren vorgesehen sein, was die Verwendung von vergleichsweise teureren Spritzgussformen erforderlich macht, für hohe Stückzahlen jedoch wirtschaftlich ist. Als eine weitere Alternative kann vorgesehen sein, dass der Behälter aus Metall besteht, beispielsweise als Schweißkonstruktion aus Blechen, so dass ohne das Erfordernis einer speziellen Herstellungs-Gießform die Behälter aus Blechzuschnitten hergestellt werden können. Insbesondere kann dabei durch die Verwendung gekanteter Bleche der Schweißaufwand reduziert werden, was wirtschaftlich vorteilhaft ist und im Sinne der Qualitätssicherung die Fehlerwahrscheinlichkeit bei der Herstellung des Behälters reduziert.

Eine Wasser sparende Bewässerung wird dadurch ermöglicht, dass die Behälter vergleichsweise geringe Mengen an Wasser abgeben, dies aber über einen langen Zeitraum. Daher können die Auslassöffnungen in einer Ausgestaltung einen geringen Durchmesser aufweisen, so dass auch ohne weitere Maßnahmen wie die Verwendung einer Steuerung oder von Ventilen oder dergleichen die Wasserabgabe aus dem Behälter über einen vergleichsweise langen Zeitraum erfolgt.

Nachfolgend werden drei Beispiele anderer Ausgestaltungen erläutert, die eine zeitlich verzögerte Wasserabgabe auch bei größeren Auslassöffnungen ermöglichen, die dementsprechend unempfindlich gegenüber unerwünschten Verstopfungen sind. diese Ausgestaltungen können allerdings auch bei kleineren Auslassöffnungen Anwendung finden, um die Wasserabgabe noch weiter zu verzögern:
Erstens kann oben im Behälter ein Ventil angeordnet sein, das als verschließbares Belüftungsventilausgestaltet ist. Bei geschlossenem Ventil baut sich durch das ausströmende Wasser ein Unterdruck im Behälter auf, so dass die Bewässerung automatisch endet. Das Öffnen des Belüftungsventils ermöglicht, den Unterdruck abzubauen, so dass anschließend wieder Wasser aus dem Behälter strömen kann, bis sich erneut ein ausreichend hoher Unterdruck im Behälter aufgebaut hat.

Zweitens kann ein Ventil vorgesehen sein, das als Auslassventil ausgestaltet ist, welches wahlweise geöffnet oder verschlossen werden kann. In einer konstruktiv einfachen Ausgestaltung können die Auslassöffnungen durch einen flachen, gelochten Schieber freigegeben oder verschlossen werden, der wahlweise so verschoben werden kann, dass seine Löcher mit den Auslassöffnungen fluchten und den Wasseraustritt ermöglichen, oder der wahlweise so verschoben werden kann, dass die Löcher nicht die Auslassöffnungen überdecken und der Wasseraustritt so minimiert oder gänzlich verhindert wird. Wenn ein solches System nicht perfekt funktioniert, indem es in seiner Verschlussstellung nicht perfekt schließt, ist das nicht problematisch, denn grundsätzlich ist ja ohnehin eine Bewässerung erwünscht. Vielmehr können auch durch ein nicht perfekt schließendes Ventilsystem die Füll-Intervalle des Behälters vergrößert werden.

Für die beiden oben genannten Varianten kann die erforderliche Energie zur Betätigung des Belüftungs- bzw. Auslass-Ventils durch ein kleines Solarmodul mit einem kleinen, langlebigen Energiespeicher z.B. in Form eines Kondensators oder Akkumulators autark bereitgestellt werden, so dass die Bewässerungsanordnung nicht an das öffentliche Stromnetz oder eine andere externe Energieversorgung angeschlossen zu werden braucht. Mittels einer elektronischen Steuerung werden die Belüftungs- bzw. Auslass-Ventile angesteuert, so dass diese mittels eines entsprechenden Aktuators wahlweise geöffnet oder geschlossen werden können, um die gewünschten Bewässerungsintervalle zu verwirklichen. Beispielsweise können die Intervalle als rein zeitliche Intervalle festgelegt sein. Bei Verwendung entsprechender Sensoren können sich die Bewässerungsintervalle aber auch nach der Bodenfeuchtigkeit richten, oder nach dem im Behälter herrschenden Unterdruck, und ggf. können Sie auch in Abhängigkeit vom Füllstand des Behälters bestimmt werden, so dass beispielsweise bei ohnehin leerem Behälter die Ventile nicht betätigt zu werden brauchen.

Eine dritte Variante kann darin bestehen, einen Perforationsschlauch zu verwenden, der eine Vielzahl von Poren bzw. kleinen Bohrungen in seiner Mantelfläche aufweist und dadurch eine langsame Wasserabgabe ermöglicht. In diesem Fall kann vorgesehen sein, dass der Behälter eine - und ggf. nur diese einzige - Auslassöffnung für das Wasser aufweist, die als Schlauchanschluss ausgestaltet ist. Außerdem ergibt sich bei dieser Variante die Möglichkeit, eine Bewässerung im Abstand vom Behälter zu ermöglichen, indem zunächst ein geschlossenwandiger Schlauch bis zur Bewässerungsstelle verlegt wird und dort an den perforierten Schlauch anschließt. Und es besteht die Möglichkeit, den Perforationsschlauch innerhalb des Bodens zu verlegen, so dass eine besonders effiziente, Wasser sparende Bewässerung dadurch ermöglicht wird, dass Verdunstungsverluste praktisch ausgeschlossen werden können und das Wasser nicht auf die Bodenoberfläche ausgegeben wird, sondern vielmehr unmittelbar in dem Boden ausgegeben wird.

Da der vorschlagsgemäße Behälter als Sitzgelegenheit nutzbar sein soll, kann er zur Erhöhung des Sitzkomforts vorteilhaft eine Lehne aufweisen, beispielsweise eine Rückenlehne und / oder eine oder zwei Armlehnen. Beispielsweise kann vorgesehen sein, eine möglichst einfache, beispielsweise quaderförmige Formgebung des einzelnen Behälters zu wählen und die Lehne als separates Element auszugestalten, so dass unter Verwendung desselben Behältertyps wahlweise Sitzgelegenheiten mit oder ohne Lehne hergestellt werden können.

Als besonders vorteilhaft wird erachtet, dass die Lehne hohl ausgestaltet ist und eine Einfüllöffnung aufweist. Dadurch, dass sowohl der Behälter als auch die Lehne befüllt werden können, wird die Füllmenge vergrößert und dementsprechend können auch die Bewässerungsintervalle vergrößert werden.

Insbesondere wird es als besonders vorteilhaft erachtet, wenn die Lehne nicht als separates Element, sondern als Abschnitt des Behälters ausgestaltet ist. Die Einfüllöffnung, die in der Lehne vorgesehen ist, kann in diesem Fall die einzige Einfüllöffnung des gesamten Behälters darstellen. Die Herstellung eines mit Lehne versehenen Behälters kann bei dieser Ausgestaltung besonders einfach erfolgen, so dass es nicht erforderlich ist, eine separat hergestellte Lehne an dem übrigen Behälter zu befestigen. Eine solche Befestigung ist mit einem erhöhten konstruktiven Aufwand verbunden und birgt ggf. die Gefahr von Undichtigkeiten, beispielsweise wenn die Lehne durch Verschraubungen oder dergleichen an die Behälterwand angeschlossen werden soll. Vielmehr kann der Behälter samt Lehne beispielsweise als einstückige Hohlform hergestellt werden, z.B. nahtlos in dem bereits erwähnten Rotationsgussverfahren.

Durch die Lehne wird das Gesamtgewicht des Behälters vergrößert, insbesondere dann, wenn auch die Lehne mit Wasser gefüllt werden kann. Bei entsprechend groß ausgestalteten Behältern, die im leeren Zustand vergleichsweise problemlos transportiert werden können, ergibt sich nach der Befüllung ein sehr großes Gewicht in Form der aufgenommenen Wassermenge. So werden nicht nur vorteilhafte große Bewässerungsintervalle ermöglicht, sondern der Behälter kann aufgrund seines hohen Eigengewichts als Bollwerk genutzt werden, beispielsweise zur Herstellung einer Absperrung, wie sie zur Absicherung von Großveranstaltungen und zur Absperrung von Straßenabschnitten oder öffentlichen Plätzen dienen kann.

Für die Dauer der Nutzung als Absperrung entfällt typischerweise die Bewässerungsfunktion, denn der Flüssigkeitsstand im Behälter soll nicht verringert werden, um das Eigengewicht des Behälters nicht zu reduzieren. Da die Großveranstaltungen typischerweise aber auf wenige Tage begrenzt sind, stellt diese Unterbrechung der Bewässerung erwartungsgemäß kein Problem für die zu bewässernden Pflanzen dar. Und insbesondere zeitlich längere Großveranstaltungen finden häufig zu Jahreszeiten statt, in denen eine Bewässerung der Pflanzen ohnehin nicht erforderlich ist oder zumindest eine solch längere Unterbrechung zulässt, wie dies beispielsweise für Weihnachtsmärkte gilt, die über mehrere Wochen andauern.

Um den gewünschten Sicherheitsaspekt zu verbessern, der mit der Absperrung erzielt werden soll, kann vorgesehen sein, den Behälter in diesem Fall nicht mit einer Bewässerungsflüssigkeit zu befüllen, sondern beispielsweise mit Sand oder einem ähnlichen Granulat, das ein höheres Raumgewicht aufweist als Wasser. Hierdurch wird nicht nur das Gesamtgewicht des befüllten Behälters vergrößert, sondern auch im Falle einer bewusst herbeigeführten Leckage vermieden, dass der Behälter innerhalb kurzer Zeit leer läuft. Es kann daher, wenn eine zumindest gelegentliche Granulatbefüllung des Behälters vorgesehen ist, eine Auslassöffnung vorgesehen sein, die als Granulatauslass bezeichnet wird und einen vergleichsweise großen Querschnitt aufweist, beispielsweise größer, als er für die Bewässerungsfunktion des Behälters erforderlich ist. Dieser Granulatauslass ermöglicht es, das Granulat aus dem Behälter zu entfernen, beispielsweise abzusaugen, so dass der Behälter nach seinem Einsatz als Absperrung zunächst geleert werden kann und anschließend mit verringertem Gewicht problemlos transportiert werden kann.

Vorteilhafte Ausgestaltungen der Neuerung werden anhand der rein schematischen Darstellungen nachfolgend näher erläutert.

Dabei zeigt
- Fig. 1: eine perspektivische Ansicht auf eine Bewässerungsanordnung mit einem ersten Ausführungsbeispiel eines Behälters,
- Fig. 2: eine perspektivische Darstellung zweier Behälter eines zweiten Ausführungsbeispiels, in montierter und in auseinandergezogener Darstellung,
- Fig. 3: eine Ansicht auf eine zweite Bewässerungsanordnung mit einem dritten Ausführungsbeispiel eines Behälters, und
- Fig. 4: eine perspektivische Ansicht auf ein viertes Ausführungsbeispiel eines Behälters.

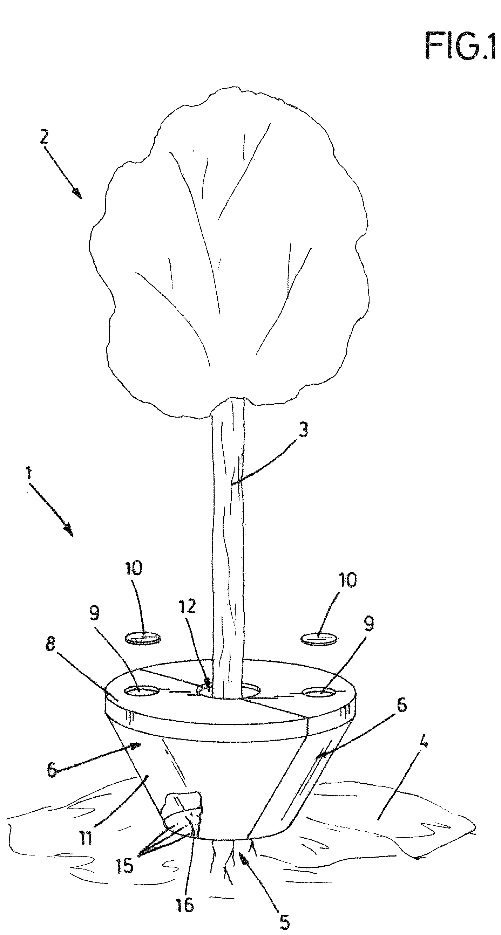

In Fig. 1 ist eine Bewässerungsanordnung 1 dargestellt, bei der als zu bewässernde Pflanze 2 eine Großpflanze in Form eines Baumes vorgesehen ist, dessen Stamm 3 bis unter eine Bodenoberfläche 4 reicht. Unterhalb der Bodenoberfläche 4 schließt ein Wurzelwerk 5 der Großpflanze nach unten an den Stamm 3 an. Um den Stamm 3 herum erstreckt sich eine Sitzbank, die durch zwei Behälter 6 geschaffen wird, welche jeweils einen U- oder C-förmigen Grundriss aufweisen und dementsprechend eine Öffnung 12 schaffen, durch welche sich der Stamm 3 erstreckt. Rein beispielhaft kann davon ausgegangen werden, dass der Behälter 6 aus Kunststoff besteht und im Rotationsgussverfahren hergestellt ist.

in Fig. 1 sind zwei Behälter 6 miteinander verbunden, die jeweils - bis auf die mittlere Öffnung 12 - einen Halbkreis bilden und so den Stamm 3 als geschlossener Ring umgeben. Die Verbindung zwischen den beiden Behältern 6 ist ausschließlich als mechanische Verbindung vorgesehen, wobei die beiden Behälter 6 identisch ausgestaltet sind. Abweichend davon kann vorgesehen sein, dass lediglich einer der beiden Behälter 6 mit einer Einfüllöffnung 9 versehen ist, und entweder beide oder auch nur einer der beiden Behälter 6 Auslassöffnungen 15 aufweist, so dass der zweite Behälter 6 nicht unmittelbar zur Bewässerung dient, sondern lediglich das Füllvolumen der aus den beiden Behältern 6 gebildeten Behälteranordnung im Vergleich zum Volumen eines einzelnen Behälters 6 vergrößert.

Abweichend von dem in Fig. 1 dargestellten Ausführungsbeispiel kann der den Stamm 3 umgebende, geschlossene Ring durch mehr als zwei Behälter 6 gebildet werden. Dort, wo benachbarte Behälter 6 aneinander grenzen, bewirken die beiden benachbarten Wandabschnitte eine mechanische Stabilisierung des Rings gegenüber Druckbelastungen von oben, wie sie beispielsweise im Falle einer Nutzung als Sitzbank auftreten. Dementsprechend kann durch die Aufteilung des Rings auf mehr als zwei Behälter 6 die Stabilität der Behälteranordnung - und damit der Sitzbank - vergrößert werden. Weiterhin ermöglichen Behälter 6, die abweichend von dem Ausführungsbeispiel der Fig. 1 nicht einen Bogen von 180° beschreiben, sondern von einem geringeren Winkel, auf besonders flexible Weise die Schaffung einer längeren Behälteranordnung, die aus derartigen Bogenstücken und aus Behältern 6 mit einem geradlinigen Grundriss zusammengestellt werden kann und den lokalen topographischen Gegebenheiten besonders gut angepasst werden kann.

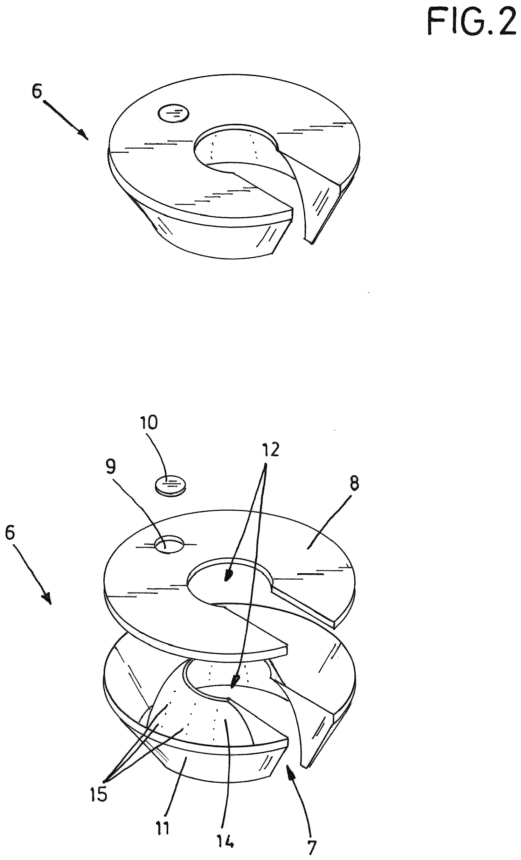

Während die beiden Behälter 6 von Fig. 1 jeweils einen halbkreisförmigen Grundriss aufweisen, zeigt Fig. 2 zwei Behälter 6 eines zweiten Ausführungsbeispiels, welches einen Grundriss aufweist, der sich erheblich weiter als 180° erstreckt und bis auf eine radiale Aussparung nahezu ringförmig geschlossen verläuft. Der oben dargestellte Behälter 6 ist komplett montiert, und von dem darunter dargestellten zweiten Behälter 6 sind in einer auseinandergezogenen Darstellung die einzelnen Bauteile erkennbar. Rein beispielhaft kann davon ausgegangen werden, dass dieses Ausführungsbeispiel des Behälters 6 aus Metall besteht und aus einzelnen, miteinander verschweißten Blechzuschnitten hergestellt ist.

Eine Oberseite 8 des Behälters 6 wird durch einen annähernd kreisrunden Blechzuschnitt gebildet, allerdings mit Ausnahme eines Freiraums 7, der in radialer Richtung verläuft und in der Mitte der Oberseite 8 auch die Öffnung 12 für den Stamm 3 bildet. Weiterhin ermöglicht in der Oberseite 8 eine Einfüllöffnung 9 die Befüllung des Behälters 6, beispielsweise aus einem Tankwagen, wobei die Einfüllöffnung 9 mit einem Deckel 10 verschließbar ist. Der Behälter 6 kann einteilig gehandhabt und seitlich an den Stamm 3 heranbewegt werden, bis der Behälter 6 den Stamm 3 umgreift und der Stamm 3 in der Öffnung 12 aufgenommen ist.

In Seitenansicht weist der Behälter 6 einen frustokonischen Querschnitt auf, wobei eine schräg nach oben und außen verlaufende Außenwand 11 des Behälter 6 bei dem dargestellten Ausführungsbeispiel geschlossenwandig ausgestaltet ist, während eine die mittlere Öffnung 12 umgebende Innenwand 14 mit einer Vielzahl von Auslassöffnungen 15 versehen ist, die einen geringen Durchmesser aufweisen und so ähnlich einer Tröpfchenbewässerung die Abgabe von Wasser aus dem Behälter 6 an den umgebenden Boden über einen längeren Zeitraum ermöglichen. Dadurch, dass die Auslassöffnungen 15 über die Höhe der Innenwand 14 verteilt angeordnet sind, kann eine verzögerte Wasserabgabe erreicht werden, indem beispielsweise nach und nach von oben nach unten die Auslassöffnungen 15 freigegeben werden und einen Wasseraustritt ermöglichen. Beispielsweise können mehrere horizontal verlaufende streifenförmige Schieber die Auslassöffnungen 15 in den jeweiligen unterschiedlichen Höhen wahlweise abdecken oder freigeben.

Dadurch, dass die Außenwand 11 und die Innenwand 14 unten annähernd spitz aneinander treffen, weist der Behälter 6 eine äußerst geringe Aufstandsfläche auf. Dies ermöglicht, den Behälter 6 in die Bodenoberfläche 4 eindringen zu lassen, so dass der Behälter 6 verschiebesicher im Boden verankert werden kann.

Im Unterschied dazu weist der Behältertyp von Fig. 1 eine breitere Aufstandsfläche mit einem Behälterboden 16 auf, so dass beim Ausführungsbeispiel der Fig. 1 die Auslassöffnungen 15 in diesem Behälterboden 16 vorgesehen sind. Dabei ist vorgesehen, den Behälter 6 der Fig. 1 mit seinem Behälterboden16 auf die Bodenoberfläche 4 aufzustellen, ohne dass der Behälter 6 in die Bodenoberfläche 4 eindringt.

Die in den Fig. 1 und 2 dargestellten Ausführungsbeispiele zeigen rein beispielhaft, dass die Behälter 6 aus unterschiedlichen Werkstoffen und in unterschiedlichen Herstellungsverfahren erzeugt sein können, dass die Auslassöffnungen 15 an unterschiedlichen Stellen angeordnet sein können, dass die Behälter 6 unterschiedliche Grundrisse aufweisen können, und dass die Innenwände 14 beispielsweise schräg nach außen verlaufen können wie in Fig. 2 oder senkrecht verlaufen können, wie dies für das Ausführungsbeispiele Fig. 1 vorgesehen ist.

Der Behälter 6 ist in der aus Fig. 2 ersichtlichen Ausgestaltung als Schweißkonstruktion aus Metall ausgestaltet. Abweichend davon kann vorgesehen sein, den Behälter 6 als monolithischen Hohlkörper auszugestalten, beispielsweise aus Kunststoff, und zwar beispielsweise im Rotationsgussverfahren. Die Stabilität der Behälter 6 und insbesondere ihrer Oberseite 8 ist so groß, dass die Oberseite 8 eine belastbare Fläche bildet, die als Sitzfläche genutzt werden kann. Weitere Abweichungen von den dargestellten Ausführungsbeispielen können darin liegen, dass die Auslassöffnungen 15 nicht nur in der Innenwand 14, sondern auch - oder sogar ausschließlich - in der Außenwand 11 angeordnet sind. Die Außenwand 11 kann - anders als dargestellt - nach unten vertikal oder schräg nach außen verlaufen, so dass das Behältervolumen maximiert werden kann, wobei die dargestellte Ausrichtung vorteilhaft einen Freiraum für die Füße bietet, wenn der Behälter 6 als Sitzgelegenheit genutzt wird.

Die Bewässerungsbehälter der Fig. 1 und 2 weisen jeweils mehrere Auslassöffnungen 15 auf. Abweichend davon kann allerdings auch vorgesehen sein, dass jeder Behälter 6 nur eine einzige Auslassöffnung 15 aufweist. Es kann sogar vorgesehen sein, dass mehrere Behälter 6 strömungstechnisch miteinander verbunden sind und innerhalb dieser Behälteranordnung nur einer der Behälter 6 eine Auslassöffnung 15 aufweist, und ggf. auch nur einer der Behälter 6 dieser Behälteranordnung eine Einfüllöffnung 9 aufweist. Dabei können die Einfüllöffnung 9 und die Auslassöffnung 15 bei demselben Behälter 6 vorgesehen sein, so dass ein solcher Behälter 6 insgesamt vorschlagsgemäß ausgestaltet ist, sie können aber auch auf zwei verschiedene Behälter 6 der Behälteranordnung verteilt sein, so dass erst durch das Zusammenwirken dieser unterschiedlichen Behältertypen die gesamte Behälteranordnung die gewünschte Funktionalität zur Aufnahme und zur Abgabe von Wasser aufweist. Wenn ein Behälter 6 bzw. eine Behälteranordnung nur eine einzige Auslassöffnung 15 aufweist, kann diese vorteilhaft als Schlauchanschluss ausgestaltet sein, von der aus ein Schlauch in den Boden führt und dort beispielsweise an einen Perforationsschlauch angeschlossen sein kann, um eine langsame Abgabe des Wassers an das Wurzelwerk 5 über einen längeren Zeitraum zu bewirken. Eine solche, als Schlauchanschluss ausgestaltete Auslassöffnung 15 kann auch an den Behältern 6 der Fig. 1 und 2 anstelle der dargestellten vielen kleinen Auslassöffnungen 15 vorgesehen sein, um die Bewässerung mittels eines Perforationsschlauchs oder eine vom Behälter 6 entfernte Bewässerung mittels eines Verlängerungsschlauchs zu ermöglichen.

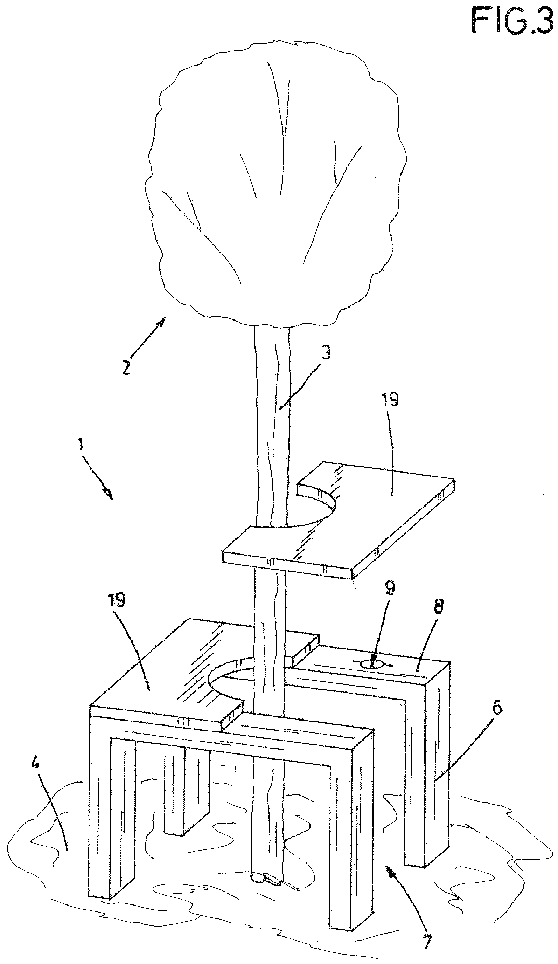

In Fig. 3 ist ein weiteres Ausführungsbeispiel einer Bewässerungsanordnung 1 dargestellt. Der Behälter 6 wird durch mehrere Rohre mit jeweils viereckigem Querschnitt gebildet, wobei auch diesem Ausführungsbeispiel der Grundriss annähernd C-förmig verläuft und der Behälter 6 somit einen Freiraum 7 aufweist, der die Aufstellung des Behälters 6 dadurch ermöglicht, dass der Behälter 6 seitlich an die Pflanze 2, die in diesem Ausführungsbeispiel als Großpflanze dargestellt ist, herangeschoben wird, bis er den Stamm 3 umgreift. Auch bei dem Ausführungsbeispiel der Fig. 3 ist die Nutzung des Behälters 6 als Sitzbank vorgesehen. Dabei wird die Sitzfläche jedoch nicht direkt durch die Oberseite 8 des Behälters 6 gebildet. Vielmehr sind zwei U-förmige Sitzplatten 19 vorgesehen, von denen die eine entfernbar ist, um die Einfüllöffnung 9 anstelle eines Deckels 10 abzudecken. Diese entfernbare Sitzplatte 19 überdeckt auch den Freiraum 7, so dass eine Sitzbank geschaffen wird, die in Form eines geschlossenen, rechteckigen Rings um den Stamm 3 verläuft.

Sitzplatten 19 können auch bei anderen Behältern 6 als dem Ausführungsbeispiel der Fig. 3 verwendet werden, z. B. bei den Behältern 6 der Fig. 2, so dass auch dort der Freiraum 7 mittels einer Sitzplatte 19 überbrückt und abgedeckt werden kann. Eine Sitzplatte 19 kann allerdings nicht nur aus diesem Grund, einen Freiraum 7 zu überbrücken, verwendet werden. Vielmehr können die Behälter 6, auch diejenigen der Fig. 1 und 2, Sitzplatten 19 aufweisen, um den Sitzkomfort zu verbessern. Beispielsweise können diese Platten 19 aus Holz bestehen, so dass sowohl bei besonders warmer als auch bei besonders kalter Witterung der

Sitzkomfort im Vergleich zu einer Oberfläche aus Metall oder Kunststoff verbessert wird. Insbesondere kann vorgesehen sein, dass abweichend von der Bezeichnung als Sitz-Platte" eine Sitzplatte 19 nicht tatsächlich als Platte ausgestaltet sein muss, sondern beispielsweise durch mehrere Leisten verwirklicht sein kann. Die Leisten können entweder separat mit der Oberfläche 8 des betreffenden Behälters 6 verbunden werden, oder sie können miteinander verbunden sein und eine gemeinsam handhabbare Baugruppe bilden, die dann als Sitzplatte 19 schnell montiert bzw. bei Bedarf schnell ausgewechselt werden kann.

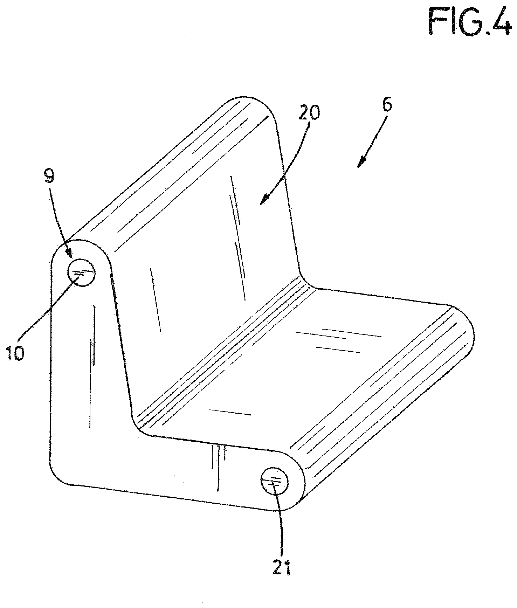

In Fig. 4 ist ein viertes Ausführungsbeispiel eines Behälters 6 dargestellt, der als Sitzbank ausgestaltet ist und eine Lehne 20 aufweist, die bei dem dargestellten Ausführungsbeispiel als Rückenlehne ausgestaltet ist. Abweichend von dem dargestellten Ausführungsbeispiel kann auch an einer oder an beiden Seiten des Behälters 6 eine Lehne 20 vorgesehen sein, die als Armlehne ausgestaltet ist, und die entweder anstelle oder zusätzlich zu der dargestellten Rückenlehne vorgesehen ist.

Der Behälter 6 von Fig. 4 ist als monolithischer Hohlbehälter ausgestaltet. Während die Sitzhöhe durch typische Vorgaben, beispielsweise in Form einer Norm, bestimmt sein kann, kann die Tiefe der Lehne 20 frei gewählt werden, so dass eine erhebliche Vergrößerung des Füllvolumens des Behälters 6 mittels der Lehne 20 erzielt werden kann, verglichen mit einer Ausgestaltung des Behälters 6 ohne eine solche Lehne 20.

Das in Fig. 4 dargestellte Ausführungsbeispiel des Behälters 6 ist als geradlinig verlaufende Sitzbank ausgestaltet. Abweichend davon kann der Behälter 6 auch bogenförmig verlaufen, so dass beispielsweise zwei oder mehr Behälter 6 einen Ring bilden, der eine Pflanze 2 wie in Fig. 1 umgibt. Weiterhin kann der Behälter 6 abweichend von dem in Fig. 4 dargestellten Ausführungsbeispiel einen Freiraum 7 schaffen, so dass der Behälter 6 um den Stamm 3 einer Pflanze 2 herum angeordnet werden kann.

Für den Fall, dass der Behälter 6 als temporäre Absperrung für Sicherungsmaßnahmen öffentlicher Straßen oder Plätze genutzt werden soll, ist der in Fig. 4 dargestellte Behälter 6 dafür vorbereitet, ein besonders hohes Maß an Stabilität durch ein besonders hohes Eigengewicht zu gewährleisten. Über die eine oder mehreren Auslassöffnungen 15 hinaus, die im Behälterboden 16 oder in der Nähe des Behälterbodens 16 angeordnet sind, zur direkten Bewässerung oder zum Anschluss einer Schlauchleitung dienen und bei dem dargestellten Ausführungsbeispiel nicht eingezeichnet sind, weist der dargestellte Behälter 6 daher einen Granulatauslass 21 auf, der einen größeren Durchmesser aufweist als die eine oder mehreren Auslassöffnungen 15. Wenn am Aufstellungsort der Absperrung und nach Entfernung des Deckels 10 Granulat in die Einfüllöffnung 9 des Behälters 6 eingefüllt wird, um diesem ein möglichst hohes Eigengewicht zu verleihen, kann später das Granulat durch den Granulatauslass 21 abgesaugt werden, um das Behältergewicht weitestgehend zu reduzieren und den möglichst leeren Behälter 6 problemlos transportieren zu können. Verbleibendes Restgranulat kann ausgespült werden, bevor der so gereinigte Behälter 6 anschließend wieder als Bewässerungsbehälter genutzt werden kann.

### Bezugszeichen:

- 1: Bewässerungsanordnung
- 2: Pflanze
- 3: Stamm
- 4: Bodenoberfläche
- 5: Wurzelwerk
- 6: Behälter
- 7: Freiraum
- 8: Oberseite
- 9: Einfüllöffnung
- 10: Deckel
- 11: Außenwand
- 12: Öffnung
- 14: Innenwand
- 15: Auslassöffnung
- 16: Behälterboden
- 19: Sitzplatte
- 20: Lehne
- 21: Granulatauslass

## Patentansprüche

1. Bewässerungsbehälter (6), der zur Bewässerung einer Pflanze (2) bestimmt ist,
wobei der Behälter (6) eine Einfüllöffnung (9) und wenigstens eine Auslassöffnung (15) aufweist,
**dadurch gekennzeichnet,**
**dass** der Behälter (6) ein formstabiles Gehäuse aufweist und in der Art als Sitzgelegenheit ausgestaltet ist, dass er eine Sitzfläche mit einer Sitzhöhe von wenigstens 30 cm aufweist.

2. Behälter nach Anspruch 1,
**dadurch gekennzeichnet,**
**dass** der Behälter (6) eine liegend ausgerichtete, als Sitzfläche dienende Oberseite (8) aufweist.

3. Behälter nach Anspruch 1 oder 2,
**dadurch gekennzeichnet,**
**dass** die Sitzfläche durch wenigstens ein Bauteil gebildet ist, welches als ein von den Behälterwänden separates Bauteil ausgestaltet ist.

4. Behälter nach Anspruch 3,
**dadurch gekennzeichnet,**
**dass** der Behälter (6) eine Halterung für die Sitzfläche aufweist.

5. Behälter nach einem der vorhergehenden Ansprüche,
**dadurch gekennzeichnet,**
**dass** der Behälter (6) einen U- oder C-förmigen Grundriss aufweist, der dazu bestimmt ist, einen Stamm (3) einer Pflanze (2) teilweise zu umschließen.

6. Behälter nach einem der vorhergehenden Ansprüche,
**dadurch gekennzeichnet,**
**dass** eine aus zwei oder mehr Behältern (6) gebildete Behälteranordnung in Form eines geschlossenen, um eine zentrale Öffnung (12) verlaufenden Rings ausgestaltet ist.

7. Behälter nach einem der vorhergehenden Ansprüche,
**dadurch gekennzeichnet,**
**dass** der Behälter (6) Anschlussmittel aufweist, mittels derer der Behälter (6) mit einem zweiten Behälter (6) in der Art einer von Wasser durchströmbaren Verbindung verbindbar ist.

8. Behälter nach einem der vorhergehenden Ansprüche,
**dadurch gekennzeichnet,**
**dass** der Behälter (6) aus Kunststoff besteht und im Rotationsgussverfahren hergestellt ist,
oder dass der Behälter (6) aus Metall besteht.

9. Behälter nach einem der vorhergehenden Ansprüche,
**dadurch gekennzeichnet,**
**dass** der Behälter (6) eine Auslassöffnung (15) aufweist, die als Schlauchanschluss ausgestaltet ist,
oder die mittels eines geringen Durchmessers als Langzeit-Bewässerungsöffnung ausgestaltet ist.

10. Behälter nach einem der vorhergehenden Ansprüche,
**dadurch gekennzeichnet,**
**dass** der Behälter (6) ein Ventil aufweist, welches als Belüftungsventil ausgestaltet ist, das wahlweise verschließbar oder zu öffnen ist,
und / oder welches als Auslassventil ausgestaltet ist, das die Auslassöffnung (15) aufweist oder dieser vorgeschaltet ist, und welches wahlweise verschließbar oder zu öffnen ist.

11. Behälter nach Anspruch 10,
**dadurch gekennzeichnet,**
**dass** das Belüftungsventil und / oder Auslassventil mittels eines elektrischen Aktuators betätigbar ist,
und **dass** dem Behälter (6) ein Solarmodul zugeordnet ist, sowie ein mittels des Solarmoduls aufladbarer elektrischer Energiespeicher, der dazu bestimmt ist, den Aktuator mit elektrischer Energie zu versorgen,
sowie eine elektronische Steuerung, derart, dass in bestimmten Intervallen das Belüftungsventil und / oder Auslassventil geöffnet oder geschlossen wird.

12. Behälter nach einem der vorhergehenden Ansprüche,
**dadurch gekennzeichnet,**
**dass** der Behälter (6) eine als Rückenlehne und / oder als Armlehne ausgestaltete Lehne (20) aufweist.

13. Behälter nach Anspruch 12,
**dadurch gekennzeichnet,**
**dass** die Lehne (20) hohl ausgestaltet ist und eine Einfüllöffnung (9) aufweist.

14. Behälter nach einem der vorhergehenden Ansprüche,
**dadurch gekennzeichnet,**
**dass** der Behälter (6) einen Granulatauslass (21) aufweist, der einen größeren Querschnitt aufweist als die Auslassöffnung (15).

15. Bewässerungsanordnung (1) zur Bewässerung einer über eine Bodenoberfläche (4) nach oben ragenden Pflanze (2), mit einem Behälter (6) nach einem der vorhergehenden Ansprüche, der eine Einfüllöffnung (9), wenigstens eine Auslassöffnung (15) und ein formstabiles Gehäuse aufweist, und der in der Art als Sitzgelegenheit ausgestaltet ist, dass er eine Sitzfläche aufweist, die wenigstens 30 cm oberhalb der Bodenoberfläche (4) angeordnet ist.

16. Bewässerungsanordnung nach Anspruch 15,
**dadurch gekennzeichnet,**
**dass** die Pflanze (2) eine Großpflanze ist,
die einen Stamm (3) aufweist, der sich von der Bodenoberfläche (4) aufwärts erstreckt,
und die ein Wurzelwerk (5) aufweist, das sich in den Boden erstreckt,
und **dass** die Auslassöffnung (15) des Behälters (6) oberhalb des Wurzelwerks (5) angeordnet ist.

17. Bewässerungsanordnung nach Anspruch 15 oder 16,
**dadurch gekennzeichnet,**
**dass** ein erster Behälter (6) mit einem zweiten Behälter (6) in der Art einer von Wasser durchströmbaren Verbindung verbunden ist.
